# EUROPÄISCHE PATENTANMELDUNG

(11) **EP 1 008 478 A2**
(43) Veröffentlichungstag der Anmeldung: **14.06.2000**
(21) Anmeldenummer: 99116312.2
(22) Anmeldetag: 19.08.1999
(51) Int. Cl.: B60K 5/12, F16F 7/00

(54) **Dämpfungselement, insbesondere Gummi-Metall-Element**

(30) Priorität: 07.12.1998 DE 29821748 U
(71) Anmelder: Dunlop Metalastik GmbH, 68229 Mannheim (DE)
(72) Erfinder: Uhland, Michael, Dipl.-Ing., 72818 Trochtelfingen (DE)
(74) Vertreter: Brommer, Hans Joachim, Dr.-Ing.

(57) **Zusammenfassung**

Die Erfindung betrifft ein Dämpfungselement in Form eines Gummi-Metall-Elementes zur Abstützung eines vibrierenden Maschinenteiles, insbesondere eines Motors, an einer Haltefläche. Es besteht aus einem gummi-elastischen Körper (2), der an zwei gegenüberliegenden Anschlußseiten (2a, 2b) je ein metallisches Anschlußteil (1, 3) trägt, das seinerseits eine Montagefläche (1a, 3a) zur Verbindung mit der Haltefläche bzw. dem vibrierenden Maschinenteil aufweist. Wesentlich ist, daß die genannten Anschlußseiten (2a, 2b) des gummi-elastischen Körpers (2) schräg gegenüber den Montageflächen (1a, 3a) geneigt sind und daß der gummi-elastische Körper als ringähnlicher Hohlkörper ausgebildet ist, von dessen einer Anschlußseite (2b) ein den Hohlkörper axial durchquerender Fortsatz (4) ausgeht, der in unbelastetem Zustand exzentrisch im Hohlkörper verläuft, so daß er unter der Gewichtsbelastung des montierten Maschinenteils nahezu in das Zentrum des Hohlkörpers verlagert wird.

## Beschreibung

Die Erfindung betrifft ein Dämpfungselement, insbesondere ein Gummi-Metall-Element zur Abstützung einer vibrierenden Maschine, insbesondere eines Motors, an einer Haltefläche, bestehend aus einem gummielastischen Körper, der an zwei etwa gegenüberliegenden Anschlußseiten je ein anvulkanisiertes, insbesondere metallisches Anschlußteil trägt, das seinerseits eine Montagefläche zur Verbindung mit der vibrierenden Maschine bzw. mit der Haltefläche aufweist.

Derartige Gummi-Metall-Elemente werden zur Schwingungsisolierung und Abfederung von Maschinen verwendet. Vorwiegend geht es speziell um die elastische Abstützung eines Motors zum Antrieb einer Hydraulikpumpe oder eines Generators in Förderfahrzeugen. Die Erfindung ist aber nicht auf diesen Anwendungsbereich beschränkt.

Der Erfindung liegt die Aufgabe zugrunde, die Federkennlinie bei gegebenen Einbaubedingungen optimal an die aufzunehmenden Kräfte anpassen zu können. Dabei soll insbesondere die Aufnahme unterschiedlich gerichteter Kräfte gezielt beeinflußt werden. Nicht zuletzt soll sich das Gummi-Metall-Element durch kompakten und kostengünstigen Aufbau auszeichnen.

Diese Aufgabe wird erfindungsgemäß dadurch gelöst, daß die genannten Anschlußseiten des gummi-elastischen Körpers schräg gegenüber den Montageflächen, insbesondere schräg gegenüber der Horizontalen geneigt sind und daß der gummi-elastische Körper als ringähnlicher Hohlkörper ausgebildet ist, von dessen einer Anschlußseite ein den Hohlkörper etwa axial durchquerender Fortsatz ausgeht, der in unbelastetem Zustand exzentrisch im Hohlkörper verläuft, so daß er unter der Gewichtsbelastung der montierten Maschine nahezu in das Zentrum des Hohlkörpers gedrückt wird.

Durch den schrägen Einbau des Gummi-Metall-Elementes ergibt sich zunächst der Vorteil einer kombinierten Druck- und Schubbelastung in dem gummi-elastischen Körper. Das heißt, daß anstelle der bei waagrechtem Einbau des gummi-elastischen Körpers relativ hohen Federsteifigkeit nunmehr weichere Kennlinien zum Tragen kommen. Dies gilt auch dann, wenn rein vertikale Kräfte auf den gummi-elastischen Körper einwirken.

Darüber hinaus ergibt sich durch die exzentrische Anordnung des Fortsatzes der Vorteil, daß dieser Fortsatz unter der Gewichtsbelastung der montierten Maschine nahezu im Zentrum des Hohlkörpers sitzt und somit eine gleichstarke Einfederung in allen Horizontalrichtungen gestattet. Die Federkennlinie kann dabei durchaus unterschiedlich sein, je nachdem, ob die Horizontalbewegungen längs oder quer erfolgen, also in der Ebene der Anschlußseite des gummi-elastischen Körpers oder schräg dazu.

Zusammenfassend gestattet also die erfindungsgemäße Ausbildung eine Optimierung der Dämpfungseigenschaften, und zwar unabhängig davon, ob die Montageflächen der metallischen Anschlußteile horizontal, vertikal oder schräg verlaufen und in welcher Richtung die aufzunehmenden Kräfte wirken.

Die Schrägstellung des gummi-elastischen Elementes wird zweckmäßig so gewählt, daß seine Anschlußseiten unter einem Neigungswinkel von etwa 20° bis etwa 40°, insbesondere zwischen 25° und 35° gegenüber der Horizontalen geneigt sind. Man erhält dann ein besonders günstiges Verhältnis von Druck- und Schubbelastung.

Die Montageflächen der metallischen Anschlußteile können an sich beliebig zueinander angeordnet sein. Optimale Abstützbedingungen erhält man aber dann, wenn beide Montageflächen etwa horizontal verlaufen.

Eine andere Weiterbildung der Erfindung besteht darin, daß der genannte Fortsatz, der von der einen Anschlußseite des gummi-elastischen Körpers ausgeht, sich in Zugrichtung an der anderen Anschlußseite abstützt. Dadurch wird der gummi-elastische Körper von Zugkräften freigehalten bzw. diese Zugkräfte auf das zulässige Maß begrenzt, je nachdem, wieviel axiale Dehnung dem gummi-elastischen Körper gestattet wird.

Die genannte Abstützung erfolgt zweckmäßig über eine mit dem Fortsatz verschraubte Scheibe, die sich an ihrem benachbarten Anschlußteil abstützt. Diese Abstützung kann auch unter leichter Verspannung herbeigeführt werden, so daß der gummi-elastische Körper immer unter einer gewissen Druckvorspannung gehalten wird.

Damit der Fortsatz bei Bewegungen in horizontaler Richtung nicht hart an der Innenwand des gummi-elastischen Körpers anschlägt, empfiehlt es sich, daß er an seinem Umfang einen elastischen Überzug aufweist. Besonders zweckmäßig ist es dabei, wenn dieser Überzug aus dem gleichen Material wie der gummi-elastische Körper ist und einstückig in ihn übergeht. Dadurch wird auch die Fertigung vereinfacht.

Damit das Gummi-Metall-Element trotz seines schräg eingebauten gummi-elastischen Körpers eine horizontale Montagefläche zur Verbindung mit der vibrierenden Maschine aufweist, kann dieses Anschlußteil als schräg abgeschnittener Kegel ausgebildet sein, derart, daß der schräge Abschnitt die horizontale Montagefläche bildet.

Demgegenüber besteht das Anschlußteil an der Unterseite des gummi-elastischen Körpers aus einem U-förmigen Profil, dessen Seitenwände schräg abgewinkelt sind, so daß sie auf eine horizontale Unterlage passen.

Hinsichtlich des Einbaues der erfindungsgemäßen Gummi-Metall-Elemente hat es sich als besonders vorteilhaft erwiesen, die Abstützung der Maschine nicht über seitlich vorstehende Arme, sondern an der Unterseite vorzusehen, und zwar derart, daß zwei Gummi-Metall-Elemente seitlich voneinander so beabstandet positioniert werden, daß sich die Achsen der gummi-elastischen Körper in einem Punkt etwas oberhalb des Schwerpunktes der abzustützenden Maschine schneiden. Dadurch wird die Lagerung 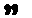 torsionsflexibel" und ermöglicht eine besonders gute Dämpfung von Torsionsschwingungen.

Weitere Merkmale und Vorteile ergeben sich aus der nachfolgenden Beschreibung eines Ausführungsbeispieles anhand der Zeichnung; dabei zeigt
- Figur 1: einen Axialschnitt durch das Gummi-Metall-Element;
- Figur 2: eine Draufsicht auf Figur 1 und
- Figur 3: die Einbausituation im Axialschnitt.

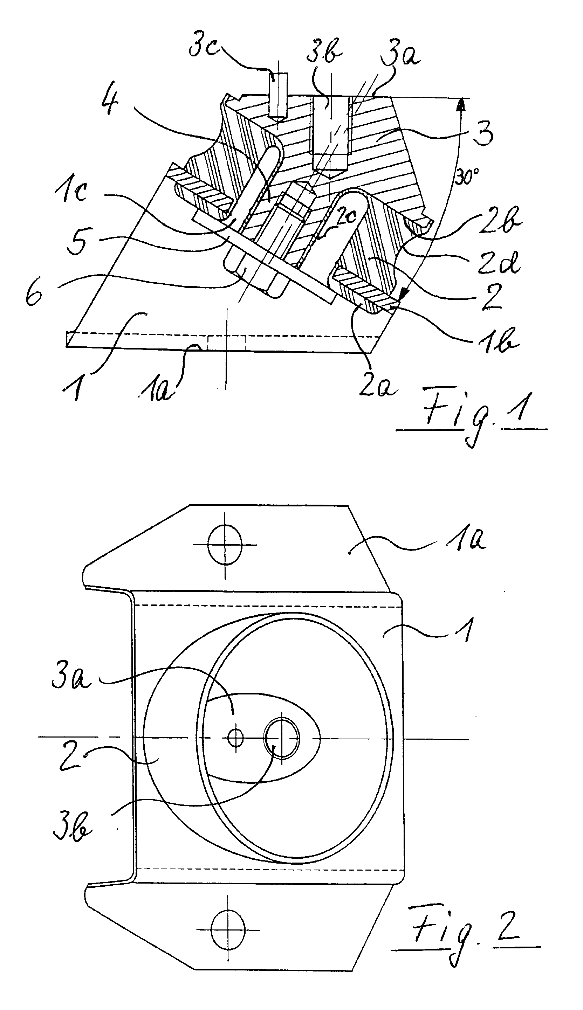

In Figur 1 erkennt man ein unteres metallisches Anschlußteil 1, das zur Montage auf einer horizontalen Haltefläche bestimmt ist. Es weist ein U-förmiges Profil auf, dessen Schenkel längs schräger Biegelinien zur Bildung von Montageleisten 1a abgebogen sind, derart, daß der die Schenkel verbindende Brückenbereich 1b des Anschlußteiles unter einem Winkel von beispielsweise etwa 30° gegenüber der horizontalen Unterlage geneigt ist.

Der genannte Brückenbereich 1b hat eine zentrale Öffnung 1c und ist dort mit dem unteren Anschlußbereich 2a eines gummi-elastischen Körpers 2 verbunden. Im Ausführungsbeispiel greift dazu der Brückenbereich 1b in eine Ringnut des gummi-elastischen Körpers ein; statt dessen könnte der gummi-elastisch Körper aber auch an der Oberseite des Brückenbereiches befestigt sein.

Der gummi-elastische Körper hat eine ringähnliche Form und trägt an seiner oberen Anschlußseite 2b ein anvulkanisiertes oberes Anschlußteil 3. Dieses Anschlußteil 3 hat im Ausführungsbeispiel die Form eines schräg abgeschnittenen Kegels, wobei der schräge Abschnitt 3a parallel zu den Montageleisten 1a verläuft und als Montagefläche zur Verbindung mit einem nicht in der Zeichnung dargestellten vibrierenden Maschinenteil dient. Dazu ist das obere Anschlußteil 3 mit einer vertikalen Gewindebohrung 3b und einem die Montage erleichterenden Paßstift 3c bestückt.

Aufgrund der beschriebenen Konfiguration bietet das erfindungsgemäße Gummi-Metall-Element trotz horizontaler Montageflächen eine geneigte Position des gummi-elastischen Körpers 2, der somit auch bei rein vertikaler Belastung kombiniert auf Druck und Schub belastet wird. Durch die daraus resultierende unterschiedliche Steifigkeit in Vertikalrichtung, in horizontaler Längsrichtung und horizontaler Querrichtung können unterschiedlich wirkende äußere Kräfte gezielt abgefangen werden.

Wesentlich ist aber außerdem, daß eines der Anschlußteile, im Ausführungsbeispiel das obere Anschlußteil 3, einen die Öffnung des gummi-elastischen Körpers 2 axial durchquerenden Fortsatz 4 aufweist und daß dieser Fortsatz nicht koaxial, sondern exzentrisch, und zwar achsparallel nach oben versetzt in der Öffnung des Körpers 2 angeordnet ist. Man erkennt dies deutlich in Figur 1, wo der links von der Achse befindliche Bereich des Ringraumes zwischen Fortsatz und gummi-elastischem Körper schmäler ist als rechts. Der Versatz ist so gewählt, daß der Fortsatz 4 bei Betriebslast etwa im Zenrum des gummi-elastischen Körpers 2 sitzt.

Außerdem erkennt man in Figur 1, daß am unteren Ende des Fortsatzes 4 eine Anschlagscheibe 5 mit Hilfe einer Mutter 6 befestigt ist. Diese Anschlagscheibe 5 befindet sich unterhalb des Brückenbereiches 1b und ist größer als deren Öffnung 1c, so daß sie bei eventuellen Zugbelastungen die Dehnung des gummi-elastischen Körpers 2 begrenzt.

Damit die beschriebene Anschlagwirkung ohne Geräuschentwicklung eintritt, ist der Brückenbereich 1b an seiner Unterseite ebenfalls gummiert, wie im Ausführungsbeispiel dargestellt, oder statt dessen wird eine gummierte Anschlagscheibe 5 verwendet.

Dem gleichen Zweck dient bei Schubbelastungen des gummi-elastischen Körpers die Ummantelung 2c des Fortsatzes 4 an seiner Umfangsfläche und die Ummantelung der Bohrung 1c im Brückenbereich. Beide Ummantelungen schließen sich einstückig an den gummi-elastischen Körper an.

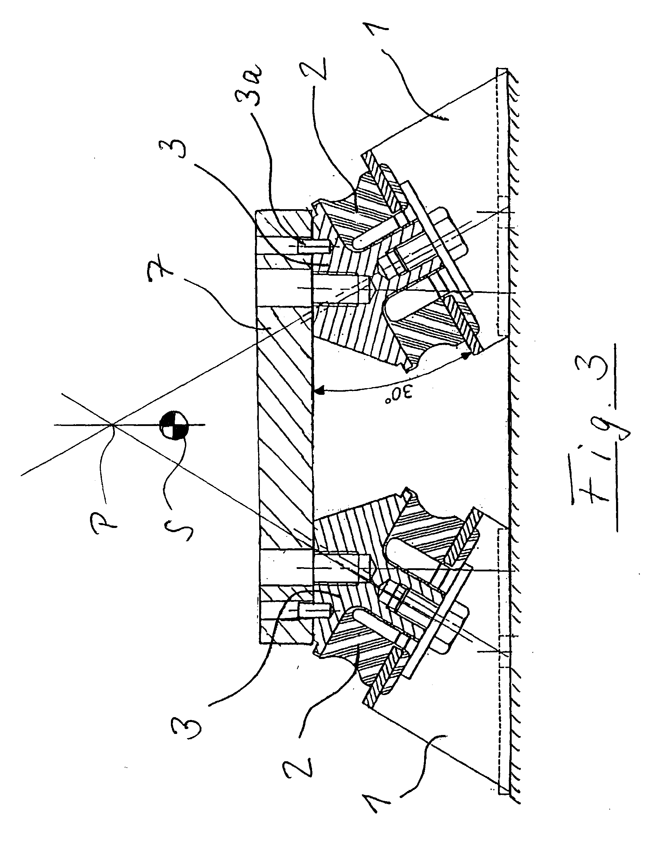

Figur 3 zeigt die Einbauposition. Dabei sind zwei der beschriebenen Gummi-Metall-Elemente etwa in einer Vertikalebene nebeneinander montiert und soweit beabstandet, daß die Achsen ihrer gummi-elastischen Körper sich in einem Schnittpunkt P wenige Zentimeter oberhalb des Schwerpunktes S der abzustützenden Maschine schneiden. Die Maschine selbst ist in der Zeichnung nicht dargestellt, lediglich ihre Grundplatte 7, die mit ihren beiden gegenüberliegenden Seiten auf den horizontalen Montageflächen 3a der beiden Gummi-Metall-Elemente aufliegt und über deren Gewindebohrungen 3b angeschraubt wird.

Zusammenfassend zeichnet sich die Erfindung durch eine weiche, insbesondere torsionsflexible Federungscharakteristik aus, wobei es die Schrägstellung des gummi-elastischen Körpers gestattet, vertikale Kräfte, horizontale Kräfte in der Zeichnungsebene und horizontale Kräfte senkrecht dazu jeweils unterschiedlich und gezielt abzufangen.

## Patentansprüche

1. Dämpfungselement, insbesondere Gummi-Metall-Element zur Abstützung eines vibrierenden Maschinenteiles, insbesondere eines Motors, an einer Haltefläche, bestehend aus einem gummi-elastischen Körper (2), der an zwei etwa gegenüberliegenden Anschlußseiten (2a, 2b) je ein vorzugsweise metallisches Anschlußteil (1, 3) trägt, das seinerseits eine Montagefläche (1a, 3a) zur Verbindung mit der Haltefläche bzw. der vibrierenden Maschine aufweist,
dadurch gekennzeichnet,
daß die genannten Anschlußseiten (2a, 2b) des gummi-elastischen Körpers (2) schräg gegenüber den Montageflächen (1a, 3a), insbesondere schräg gegenüber der Horizontalen geneigt sind und daß der gummi-elastische Körper (2) als ringähnlicher Hohlkörper ausgebildet ist, von dessen einer Anschlußseite (2b) ein den Hohlkörper etwa axial durchquerender Fortsatz (4) ausgeht, der in unbelastetem Zustand exzentrisch im Hohlkörper (2) verläuft, so daß er unter der Gewichtsbelastung der montierten Maschine nahezu in das Zentrum des Hohlkörpers (2) verlagert wird.

2. Dämpfungselement nach Anspruch 1,
dadurch gekennzeichnet,
daß die Anschlußseiten (2a, 2b) des gummi-elastischen Körpers (2) unter einem Neigungswinkel von etwa 20° bis etwa 40°, insbesondere etwa 25° bis etwa 35° gegenüber der Horizontalen geneigt sind.

3. Dämpfungselement nach Anspruch 1,
dadurch gekennzeichnet,
daß die Montageflächen (1a, 3a) etwa parallel oder orthogonal zueinander angeordnet sind.

4. Dämpfungselement nach Anspruch 1,
dadurch gekennzeichnet,
daß die Montageflächen (1a, 3a) etwa horizontal verlaufen.

5. Dämpfungselement nach Anspruch 1,
dadurch gekennzeichnet,
daß sich der Fortsatz (4) in Zugrichtung an der anderen Anschlußseite (2a) bzw. an dem dortigen Anschlußteil (1) abstützt.

6. Dämpfungselement nach Anspruch 5,
dadurch gekennzeichnet,
daß die Abstützung mittelbar über eine Aschlagscheibe (5) erfolgt.

7. Dämpfungselement nach Anspruch 1,
dadurch gekennzeichnet,
daß der Fortsatz (4) an seinem Umfang einen gummi-elastischen Überzug (2c) aufweist.

8. Dämpfungselement nach Anspruch 7,
dadurch gekennzeichnet,
daß der Überzug (2c) einstückig in den gummielastischen Körper (2) übergeht.

9. Dämpfungselement nach Anspruch 1,
dadurch gekennzeichnet,
daß der gummi-elastische Körper (2) an seiner äußeren Umfangsfläche eine Ringnut (2d) aufweist.

10. Dämpfungselement nach Anspruch 1,
dadurch gekennzeichnet,
daß das Anschlußteil (3) für die abzustützende Maschine als schräg abgeschnittener Kegel ausgebildet ist.

11. Dämpfungselement nach Anspruch 1,
dadurch gekennzeichnet,
daß es mit einem gleichartigen Dämpfungselement kombiniert ist, wobei der Abstand zwischen beiden Dämpfungselementen so gewählt ist, daß die Achsen der gummi-elastischen Körper (2) sich in einer Höhe oberhalb des Schwerpunktes (s) der abzustützenden Maschine kreuzen, insbesondere schneiden.
